Europäisches Patentamt

European Patent Office

Office européen des brevets

(11) Publication number: 0 313 063
A2

## EUROPEAN PATENT APPLICATION

(21) Application number: 88117556.6

(22) Date of filing: 21.10.88

(51) Int. Cl.4: G11B 5/70

(30) Priority: 23.10.87 JP 266257/87
16.02.88 JP 31774/88
16.02.88 JP 31775/88

(43) Date of publication of application:
26.04.89 Bulletin 89/17

(84) Designated Contracting States:
DE FR GB IT

(71) Applicant: Kyodo Printing Co., Ltd.
14-12, Koishikawa 4-chome Bunkyo-ku
Tokyo 112(JP)

(72) Inventor: Fujita, Minoru c/o Kyodo Printing
Co., Ltd.
nai, 14-12, Koishikawa 4-chome
Bunkyo-ku Tokyo(JP)
Inventor: Nakahara, Yoshihiko c/o Kyodo
Printing Co., Ltd.
nai, 14-12, Koishikawa 4-chome
Bunkyo-ku Tokyo(JP)
Inventor: Sugaya, Kenji c/o Kyodo Printing
Co., Ltd.
nai, 14-12, Koishikawa 4-chome
Bunkyo-ku Tokyo(JP)

(74) Representative: Gervasi, Gemma
NOTARBARTOLO & GERVASI Srl Viale
Bianca Maria 33
I-20122 Milan(IT)

(54) Magnetic record medium.

(57) A magnetic record medium is provided which is improved in security and characterized in that it has a magnetic printed pattern of a magnetic material which has a particle size smaller than 10 microns and a coercive force less than 30 oersteds. A magnetic record medium is also provided which is improved in security and presents a high S/N ratio upon detection thereof. The magnetic record medium is characterized in that it has a magnetic pattern having a width smaller than 1 mm. Furthe, a magnetic record medium is provided which is improved in security and on which binary information can be recorded. The magnetic record medium is characterized in that it has a first magnetic pattern having a width smaller than 1 mm and a second magnetic pattern having a width equal to or greater than 1 mm.

### F I G.1

## Magnetic Record Medium

BACKGROUND OF THE INVENTION

1. Field of the Invention

This invention relates to a magnetic record medium having a magnetic pattern thereon.

The present invention can be applied, for example, to various cards having magnetic coded bars thereon, information record carriers which employ magnetic bars, and so on.

The present invention is effective for improvement in security of a magnetic record medium.

2. Description of the Prior Art

Conventionally, such a method is adopted that a code formed at a predetermined portion of a magnetic card for discriminating whether the magnetic card is genuine or counterfeit is read by a magnetic head to discriminate whether the card is genuine or counterfeit in order to improve the security of the card.

In such a conventional magnetic card, a code for discriminating whether the card is genuine or counterfeit is composed of magnetic printed patterns and non-magnetic dummy printed patterns so that the code may not be deciphered readily. Such a material as magnetite ($Fe_3O_4$) or maghemite ($\gamma$-$Fe_2O_3$) is used as a pigment for ink of magnetic printed patterns. Those materials are used also for paper money as well known in the art.

With such a conventional magnetic record medium as described above, the coercive force of a magnetic pigment of magnetic printed patterns is high. For example, while magnetite is suitable for ink for magnetic printing because the diameter of particles is smaller than 1 micron, it has a great coercive force of 40 oersteds. Also maghemite has a coercive force of 250 oersteds or so.

Accordingly, there is a problem that, if an external magnetic field is applied once to the magnetic record medium in order to read the code for discriminating whether the magnetic record medium is genuine or counterfeit, remnant magnetization is produced at a magnetic printed pattern of the magnetic record medium so that the code which is employed for security of the magnetic record medium can be discriminated visually if a magnetic viewer or the like on the market is used.

In order to resolve the problem, a method is conventionally employed wherein demagnetization is carried out each time an external magnetic field is applied to a magnetic record medium for reading or the like. The method, however, has a drawback that a system is complicated.

Further, some of bills or cards which spread widely these days have magnetic patterns for discriminating whether the bill or card is genuine or counterfeit. The magnetic patterns are detected by a magnetic sensor to make discrimination whether the bill or card is genuine or counterfeit in order to attain provision of and improvement in security.

Where a code is formed or some information is recorded, using a magnetic pattern, on a bill, a card or some other general magnetic record media, it is one of most basic requirements to raise a reproduction output from the code and improve the S/N ratio of the output. This requirement always survives as a subject to be resolved.

Further, where a code is formed or some information is recorded, using a magnetic pattern, on a bill, a card or some other general magnetic record media, information is sometimes recorded as binary information of "0" or "1".

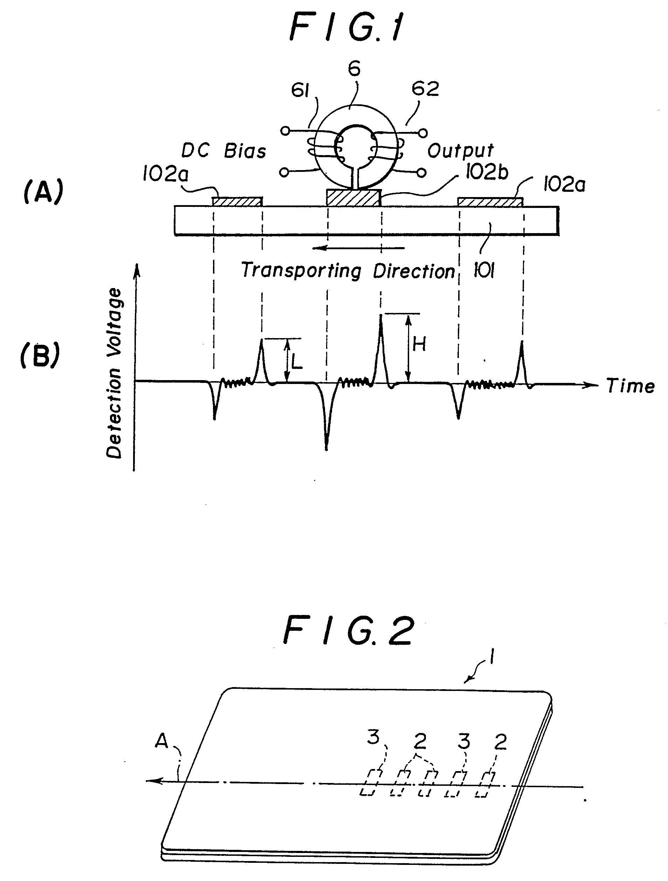

Figs. 1(A) and 1(B) are diagrammatic representations illustrating binary information recorded using a conventional magnetic record medium. Referring to Figs. 1(A) and 1(B), in order to record binary information depending upon a magnitude of a detection voltage in accordance with a conventional method, it is necessary to change the thickness of a magnetic pattern 102a or 102b to be formed on a base member 101 in response to binary information. In particular, a thick magnetic pattern 102b is formed in order to obtain an output of a high level therefrom, and a thin magnetic pattern 102a is formed in order to obtain an output of a low level therefrom.

As such a magnetic pattern is scanned, a detection voltage corresponding to the thickness of a magnetic pattern being read is developed from a detecting coil 62 of a magnetic head 6, and binary information is reproduced in this manner.

2

However, according to the conventional method wherein binary information is recorded in accordance with the magnitude of a detection voltage of a magnetic pattern, the thickness of the magnetic pattern must be changed as described above. Accordingly, there are problems that the process for production is complicated and that a magnetic pattern can be visually discriminated readily, which results in deterioration in security.

SUMMARY OF THE INVENTION

The present invention contemplates resolution of such problems of the conventional magnetic record media as described above, and it is an object of the present invention to provide a magnetic record medium which is simple in construction and high in security.

It is another object of the present invention to provide a magnetic record medium which can assure a high detection output with a simple construction.

It is a further object of the present invention to provide a magnetic record medium which can assure a high detection output without changing the thickness of a magnetic pattern and on and from which binary information can be recorded and detected readily.

In order to attain the objects, according to one aspect of the present invention, there is provided a magnetic record medium which is characterized in that it has a magnetic printed pattern of a magnetic material which has a particle size smaller than 10 microns and a coercive force less than 30 oersteds.

Here particles of the magnetic material preferably have either a spherical or a scale-like profile.

Because the particle size of the magnetic material is smaller than 10 microns, the magnetic material is suitable to make ink for magnetic printing.

Because the magnetic material has a coercive force less than 30 oersteds, even if it is exposed to an external magnetic field, it has such small remnant magnetization that the magnetic record pattern thereon cannot be visually observed by means of a magnetic viewer, a "MAGNA-SEE" (registered trade mark, a product of CBS RECORDS) or the like. Accordingly, even if special processing of demagnetization is not applied to the magnetic record medium, the security of the magnetic record medium can be improved with a very simple construction.

According to another aspect of the present invention, a record medium is characterized in that it has a magnetic pattern having a width smaller than 1 mm.

If a magnetic pattern having a width smaller than 1 mm is detected by a magnetic head, then the detection output presents a considerably higher value comparing with a magnetic pattern having a width of greater than 1 mm. Particularly where the width is smaller than 0.5 mm, the detection voltage presents an increase of 30 percent to 110 percent and exhibits a remarkable effect.

According to a further aspect of the present invention, a magnetic record medium is characterized in that it has a first magnetic pattern having a width smaller than 1 mm and a second magnetic pattern having a width greater than 1 mm.

Here, binary information can be recorded with the first and second magnetic patterns. Besides, a dummy pattern or patterns of a non-magnetic material can be mixed in the first and second magnetic patterns.

With the magnetic record medium of the construction, information can be recorded only by changing the width of a magnetic pattern, and accordingly it can be produced readily. Further, since the thickness is uniform, the security is improved.

The above and other objects, features and advantages of the present invention will become apparent from the following description and the appended claims, taken in conjunction with the accompanying drawings.

BRIEF DESCRIPTION OF THE DRAWINGS

Figs. 1(A) and 1(B) are diagrammatic representations illustrating binary information recorded on a conventional magnetic record medium;

Fig. 2 is a schematic perspective view of a magnetic record medium showing a preferred embodiment of the present invention;

Fig. 3 is a diagrammatic representation illustrating a method of reading the magnetic record medium of Fig. 2;

Figs. 4(A) to 4(D) are diagrammatic representations illustrating various steps of a process of producing the magnetic record medium of Fig. 2;

Fig. 5 is a schematic perspective view of another magnetic record medium showing a second preferred embodiment of the present invention;

Figs. 6(A) to 6(D) are diagrammatic representations illustrating various steps of a process of producing a further magnetic record medium according to a third preferred embodiment of the present invention;

Figs. 7(A) to 7(C) are diagrammatic representations illustrating a relationship between a magnitude of a typical output voltage and a width of a magnetic pattern when the magnetic record medium of Fig. 6(D) is scanned by a magnetic head;

Fig. 8 is a graph illustrating a relationship between a width of a magnetic bar and a detection signal;

Fig. 9 is a schematic sectional view of a magnetic record medium showing a fourth preferred embodiment of the present invention; and

Figs. 10(A) and (B) are diagrammatic representations illustrating construction of magnetic patterns and a non-magnetic pattern formed on the magnetic record medium of Fig. 9.

## DETAILED DESCRIPTION OF THE INVENTION

Referring first to Fig. 2 which shows a magnetic record medium according to a first preferred embodiment of the present invention, the magnetic record medium in the form of a magnetic card 1 has a bar code provided on a base member thereof. The bar code is composed of a plurality of magnetic printed patterns 2 and a plurality of non-magnetic printed patterns 3.

The base member is formed from a piece of paper or a film of a synthetic resin material such as PET, PVC, PC or the like and may have a magnetic record layer on a front or reverse surface thereof. The bar code may be provided on the magnetic record layer. In the case of the magnetic record medium of the present embodiment, the bar code is utilized for security and serves as a code for discriminating whether the magnetic record medium is genuine or counterfeit.

The magnetic pigment which is used for magnetic ink for the magnetic printed patterns 2 has a particle size smaller than 10 microns, preferably of 0.01 to 5 microns, taking it into consideration to make ink from the material and has a coercive force less than 30 oersteds, preferably less than 20 oersteds in order to attain reduction in remnant magnetism.

Materials which meet such requirements as described just above include soft magnetic metal powder such as soft magnetic ferrite powder such as powder of Cu-Zn ferrite, Mn-Zn ferrite and Ni-Zn ferrite and iron powder, and soft magnetic alloy power such as Mo-permalloy powder and Sendust powder. Above all, carbonyl iron powder is particularly preferable because particles thereof have a spherical profile and have a comparatively uniform particle size smaller than several microns comparing with reduced iron powder or the like which has an undefined particle profile. However, magnetic powder which has similar characteristics could be employed in place of carbonyl iron powder.

Further, if the aptitude for ink and the anisotropy in profile are taken into consideration, magnetic power should have either a spherical or scale-like profile so that it may be so low in coercive force as to make it difficult to achieve visual observation by means of a magnetic viewer or the like.

Selection of a magnetic pigment has been made in the following manner. At first, characteristics of exemplary materials are shown in Table 1 below.

Table 1

| | Measured Magnetic Field: 10 K (Oe) | | | |
|---|---|---|---|---|
| Magnetic Pigment | Particle Size | Coercive Force | Saturation Magnetization | Remnant Magnetization |
| | $(\mu m)$ | Hc (Oe) | (emu/g) | $\sigma r$ (emu/g) |
| Cu-Zn Ferrite | 3.7 | 36 | 61 | 4.5 |
| Mn-Zn Ferrite 1 | 3.2 | 11 | 85 | 1.7 |
| Mn-Zn Ferrite 2 | 1.4 | 80 | 83 | 13 |
| Magnetite | 0.7 | 63 | 85 | 6.1 |
| Carbonyl Iron Powder | 1.6 | 8.8 | 196 | 0.4 |

Mixture liquids consisting of 50 parts (by weight, similar in the following) of the individual magnetic pigments listed in Table 1 above, 10 parts of a polyester resin material, 20 parts of cyclohexanone and 20 parts of Butyl Cellosolve were kneaded for about an hour by a roll mill to prepare magnetic inks in which the components were dispersed uniformly. Subsequently, the magnetic inks were diluted with a solvent wherein cyclohexanone and Butyl Cellosolve were mixed with a rate of 1:1 so that the coefficient of viscosity may be adjusted to 100 poise.

The magnetic inks obtained in this manner were then applied in patterns of 1 mm wide and 5 mm long to a white polyester film (thickness of 200 microns) by silk screen printing (Tetron #250), and then the polyester film was cut in predetermined dimensions to produce magnetic cards.

Then, a samarium-cobalt magnet is closely contacted with the magnetic printed patterns formed in this manner on the magnetic carts to magnetize the magnetic printed patterns. After then, the magnetic cards were tested by means of a magnetic viewer in order to find whether the magnetic printed patterns could be visually observed. Characteristics of the magnetic printed patterns formed by the individual magnetic pigments and visual observability of them are listed in Table 2 below.

Table 2 - 1

| | Measured Magnetic Field: 10 K(Oe) | | |
|---|---|---|---|
| Magnetic Pigment | Film Thickness | Coercive Force | Saturation Magnetic Flux Density |
| | $(\mu m)$ | Hc (Oe) | $\phi s$ (Mx/cm) |
| Cu-Zn Ferrite | 10 | 40.2 | 1.61 |
| Mn-Zn Ferrite 1 | 15 | 17.6 | 2.49 |
| Mn-Zn Ferrite 2 | 11 | 43.3 | 1.50 |
| Magnetite | 12 | 59.7 | 2.03 |
| Carbonyl Iron Powder | 10 | 9.5 | 6.51 |

Table 2 - 2

| Magnetic Pigment | Remnant Magnetic Flux Density | Rectangular Ratio | Visual Observability |
|---|---|---|---|
| | ør (Mx/cm) | ør/øs | |
| Cu-Zn Ferrite | 0.23 | 0.14 | Observed |
| Mn-Zn Ferrite 1 | 0.13 | 0.05 | Observed a Little |
| Mn-Zn Ferrite 2 | 0.21 | 0.14 | Observed |
| Magnetite | 0.31 | 0.15 | Observed |
| Carbonyl Iron Powder | 0.024 | 0.004 | Not Observed |

From the results of visual observability, magnetic pigments are desirable which have a coercive force less than 40 oersteds, preferably less than 20 oersteds. Particularly iron powder and soft magnetic alloy powder are effective because they have small coercive forces. Further, the particle size should be less than 10 microns, preferably 0.01 to 5 microns for production of ink. Carbonyl iron powder is suitable also in this regard.

It is to be noted that, if the magnetic printed patterns are scanned while DC current is supplied to a magnetic head so that a leakage magnetic field of the magnetic head may be 1,000 oersteds or so, then a sufficient detection voltage can be produced from the magnetic printed patterns.

Resin materials which can be used for inks for silk screen printing include binder resin materials which are generally used for coating inks, such as, for example, polyester resins, alkyd resins, vinyl resins and polyurethane resins, and mixtures of the named resins.

Meanwhile, resin materials which can be used for inks for offset printing include polyester resins and acrylic resins which both are commonly used.

The ratio of composition between a resin and a pigment (resin/pigment) is available within a range from 1/1 to 1/10, preferably from 1/3 to 1/8, by weight, taking the adhesive property to a base member, the strength of an applied film, a detection voltage and so on into consideration.

The magnetic printed patterns 2 and the non-magnetic printed patterns 3 formed in this manner are read out by a magnetic head when the magnetic card 1 is moved in the direction indicated by an arrow mark A in Fig. 2 relative to the magnetic head.

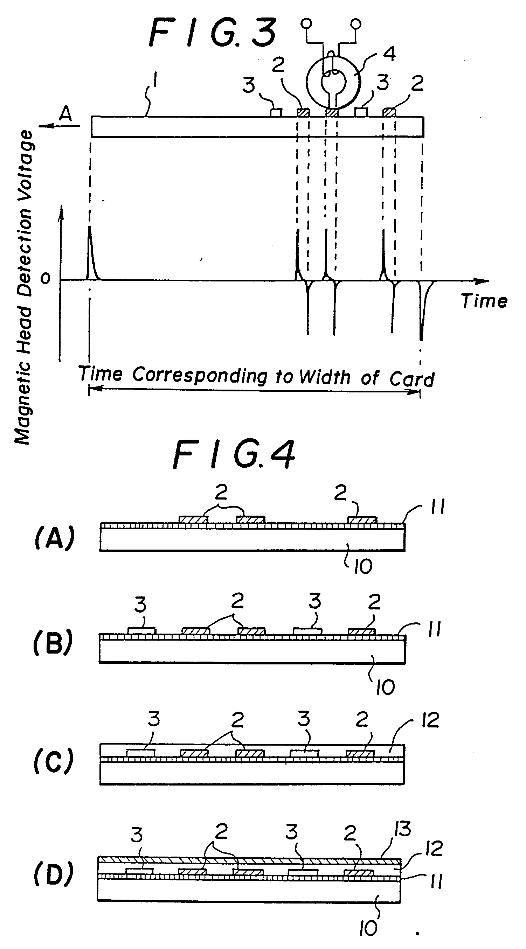

Fig. 3 illustrates a method of reading the magnetic card 1 of the present embodiment. Referring to Fig. 3, the magnetic card 1 is inserted into a reading device and transported in the direction of the arrow mark A in the reading device. During such transportation, the magnetic card 1 is scanned by a magnetic head 4 which produces a predetermined magnetic flux with a DC current flow therethrough so that information thereon is read out by the magnetic head 4.

In particular, when the magnetic head 4 passes over a magnetic printed pattern 2, it is magnetically coupled to the magnetic printed pattern 2 so that it is changed in magnetic flux and thus produces voltages of the opposite polarities at a beginning end and a last end of the magnetic pattern 2. To the contrary, since no change in magnetic flux occurs at a non-magnetic printed pattern 3, no voltage is produced in the magnetic head 4.

It is to be noted that, where a magnetic record layer processed for orientation is formed on a surface of the base member, detection voltages of the opposite polarities are produced in the magnetic head 4 at the beginning end and the last end of the card 1.

When the bar code is scanned in this manner as shown in Fig. 3, a voltage is detected from the magnetic head 4 at a position at which a magnetic printed pattern 2 exists, and accordingly record contents can be read out from the magnetic card 1.

Scanning for reading is carried out while a magnetic flux is produced by the magnetic head 4 in this manner. However, since the magnetic printed patterns 2 in the present embodiment are formed from a magnetic pigment having a small coercive force as described hereinabove, the remnant magnetization is sufficiently low even after such scanning so that it cannot be detected by means of a magnetic viewer or the like put on the market.

Accordingly, even if presence of the printed patterns of the bar code could be visually observed on the card, it cannot be discerned which bars are magnetic printed patterns and hence the bar code which is utilized for security cannot be deciphered.

In the following, a process of producing the magnetic record medium of the present embodiment will be described with reference to Figs. 4(A) to 4(D) which illustrate different steps of the producing process.

At first, magnetic ink and dummy ink were produced in the following manner.

Mixture liquid consisting of 50 parts of carbonyl iron powder having an average particle size of 1.7 microns and a coercive force of 8.8 oersteds, 10 parts of a polyester resin, 20 parts of cyclohexanone and 20 parts of Butyl Cellosolve was kneaded for about an hour by a roll mill to prepare magnetic ink in which the components were dispersed uniformly.

Meanwhile, dummy ink was prepared by similar dispersing processing using a non-magnetic organic pigment having an average particle size of 1.5 microns in place of carbonyl iron powder of the composition.

Subsequently, a magnetic record layer 11 having a thickness of 10 microns and a coercive force of 2,750 oersteds was formed on one face of a white polyester film 10 having a thickness of 200 microns as seen in Fig. 4(A).

Then, the magnetic ink was applied to predetermined locations on the magnetic record layer 11 by silk screen printing (mesh #250) to form magnetic printed patterns 2 having a width of 0.5 mm, a length of 5 mm and a thickness of 1.0 micron after drying. The coercive force of the magnetic printed patterns 2 was 9.5 oersteds.

Subsequently, the dummy ink was applied in a similar manner to form non-magnetic printed patterns 3 of a similar profile at predetermined locations as seen in Fig. 4(B).

After then, in order to cover the printed patterns 2 and 3, silver ink in which A1 powder of scale-like particles was dispersed was applied to an entire face of the polyester film 10 as shown in Fig. 4(C) to form a silver ink layer 12 such that the thickness thereof after drying may be 2 microns.

Finally, an over coat layer 13 having a thickness of 2 microns for surface protection was formed by silk screen printing as seen in Fig. 4(D), and the polyester film 10 was cut into cards of a predetermined size, thereby completing the magnetic card of the present embodiment.

The magnetic card 1 of the present embodiment was then inserted into the reading device in which the card 1 was scanned in a leakage magnetic field of 1,000 oersteds or so produced by the magnetic head 4.

Here, the reason why the leakage magnetic field of 1,000 oersteds or so was produced is that it is necessary to make the same leakage magnetic field sufficiently smaller than the coercive force of the magnetic record layer 11 (2,750 oersteds) to prevent magnetization of the magnetic record layer 11 while it is necessary to sufficiently magnetize the magnetic printed patterns 2.

With the magnetic card 1, a voltage which can be detected sufficiently was produced at a beginning end and a last end of each of the magnetic printed patterns 2. Further, after such scanning, the magnetic printed patterns 2 were visually examined by means of a magnetic viewer or the like put on the market. No remnant magnetization pattern, however, was visually observed.

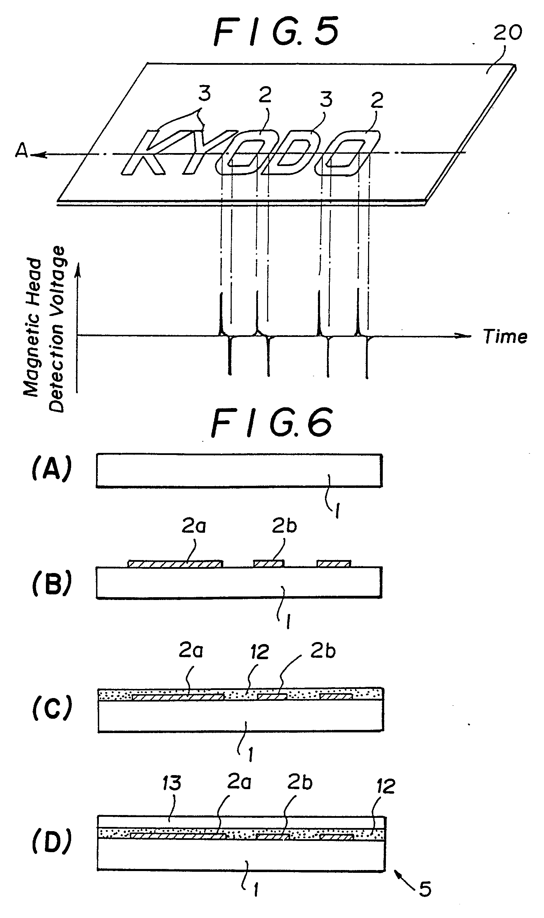

Referring now to Fig. 5, another magnetic record medium according to a second preferred embodiment of the present invention is shown. The magnetic record medium is produced in the following process.

At first, 40 parts of carbonyl iron powder having an average particle size of 1.7 microns and a coercive force of 8.8 oersteds, 10 parts of carbon black having an average particle size of 0.5 microns and 50 parts of ultraviolet light curable vehicle were kneaded by a roll mill to prepare magnetic ink.

Meanwhile, dummy ink was prepared by kneading 50 parts of carbon black having an average particle size of 0.5 microns and 50 parts of ultraviolet light curable vehicle using the roll mill.

Then, using the inks, magnetic printed patterns 2 and non-magnetic printed patterns 3 having a thickness of 1 micron were formed on fine quality paper 20 having a thickness of 200 microns by UV offset printing. The printed patterns 2 and 3 look black due to the carbon black contained therein, and accordingly discrimination of the magnetic printed patterns 2 depending upon colors is impossible.

The magnetic card 1 of the present embodiment produced in this manner was then inserted into the reading device in which the card 1 was scanned in a leakage magnetic field of 1,000 oersteds or so produced by the magnetic head 4.

With the magnetic card, a voltage which can be detected sufficiently was produced at a beginning end and a last end of each of the magnetic printed patterns 2. Further, after such scanning, the magnetic printed patterns 2 were visually examined by means of a magnetic viewer or the like on the market, but no remnant magnetization pattern was visually observed.

Referring now to Figs. 6(A) to 6(D), different steps of a process of producing a magnetic record medium according to a third preferred embodiment of the present invention are illustratively shown.

At first, a base member 1 of a polyethylene terephthalate film having a thickness of 188 microns or 250 microns as shown in Fig. 6(A) was prepared.

Subsequently, magnetic ink patterns 2a and 2b were printed on the base member 1 as shown in Fig. 6-(B). The patterns 2a were magnetic bars having a width greater than 1 mm while the patterns 2b are

7

magnetic bars having a width smaller than 1 mm. Here, the arrangement of the patterns 2a and 2b can be made correspond to binary information to be recorded as hereinafter described. It is to be noted that the patterns 2a and 2b were unified in length to 10.0 mm.

The magnetic ink patterns 2a and 2b were printed by screen printing, and the screen mesh then was Tetron 250 lines.

The original solution of the magnetic ink was prepared by kneading 48 parts of carbonyl iron, 24 parts of denaturalized polyester resin liquid (including 50 weight percent of solids), 7 parts of isophorone, 7 parts of Butyl Cellosolve, 7 parts of cyclohexanone and 7 parts of Solvesso 100 for 2 hours by means of a roll mill. The coefficient of viscosity of the magnetic ink was 100 poise. The carbonyl iron used had a density of 3.0 to 3.2 g/cm$^3$, a particle size of 1.5 to 1.8 microns and a coercive force of about 10 oersteds.

Here, the carbonyl iron is spherical iron powder having a uniform particle size which is obtained by reduction of iron carbonyl, and normally two kinds of carbonyl iron exist depending upon reducing methods. The first kind of carbonyl iron contains carbon, nitrogen and oxygen therein and has a high Vickers hardness Hv of about 900, and the second kind of carbonyl iron is lower in content of carbon, nitrogen and oxygen and accordingly high in purity and thus has a Vickers hardness Hv of about 150. In the present embodiment, the first kind of carbonyl iron was used wherein particles thereof maintained their spherical shapes without being deformed and it presented little change in coercive force when it was made into ink.

To the contrary, reduced iron powder which is produced by reduction of iron oxides or electrolytic iron powder which is produced by electrorefining of iron cannot be made into ink readily because they are undefined in profile and wide in particle size distribution and further have a large particle size of more than several tens microns. Further, magnetic ink patterns for which reduced iron powder or electrolytic iron powder is used present a high output fluctuation upon detection thereof comparing with magnetic ink patterns for which carbonyl iron is used.

The patterns 2a and 2b printed with the screen mesh of 250 lines using the magnetic ink original solution employing carbonyl iron as it was presented a thickness of about 9 microns. This sample will be hereinafter referred to as sample A.

Meanwhile, 10 parts of the magnetic ink described above were diluted with one part of thinner consisting of one part of isophorone, one part of Butyl Cellosolve, one part of cyclohexanone and one part of Solvesso 100, and the thus diluted magnetic ink was printed with the screen mesh of 250 lines. The thickness of the magnetic ink patterns was about 7.5 microns. The sample will be hereinafter referred to as a sample B.

Further, 10 parts of the magnetic ink original solution was diluted with 2 parts of the thinner described above, and using the ink, screen printing was effected in the same conditions. Here, the thickness of the patterns was 5.5 microns. This sample will be hereinafter referred to as sample C.

It is to be noted that measurement of the magnetic flux density and the coercive force of the patterns of the magnetic inks after a magnetic field had been applied to 5,000 oersteds by a magnetometer of the sample vibrating type (VSM) revealed that the magnetic flux density and the coercive force were about 4,400 gausses and 10.1 oersteds, respectively.

Subsequently, a silver ink layer 12 was formed as shown in Fig. 6(C) in order to cover the magnetic ink patterns 2 formed in such a manner as described above. Particles of the pigment of the silver ink had a scale-like profile, and the coated film of the pigment can assure a sufficient covering effect even with the thickness of 1 to 2 microns or so. Here, the thickness of the silver ink layer 12 was about 1 micron. It is to be noted that aluminum pigment of scale-like particles is suitable as the pigment of the silver ink.

Then, an over coat layer 13 was formed on the silver ink layer 12 as shown in Fig. 6(D). The over coat layer 13 is provided in order to provide a sufficient resistance to friction of a magnetic head 6 when the magnetic record medium is scanned by the magnetic head 6 to detect the magnetic ink patterns 2 thereon. The over coat layer 13 was formed in thickness of about 2 microns.

The base material 1 on which the magnetic ink patterns 2a and 2b and so on were formed in such a manner as described above was then cut into cards of the commuter's ticket size of 57.5 mm x 85 mm, thereby completing the sample card 5 of the present embodiment.

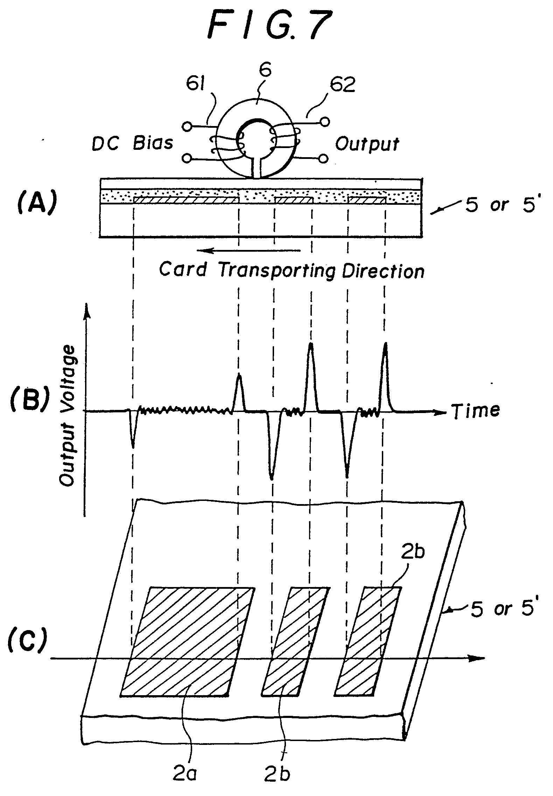

Figs. 7(A) to 7(C) are diagrammatic representations illustrating a relationship between the magnitude of an output voltage and a width of a magnetic ink pattern when the sample card 5 of the present embodiment is scanned by the magnetic head 6.

Referring first to Fig. 7(A), a magnetic head 6 has a gap of 30 microns and a track width of 1 mm and includes a biasing coil 61 and a detecting coil 62.

At first, a dc bias current of 20 mA or so is supplied to flow through the biasing coil 61 to cause the biasing coil 61 to produce a leakage magnetic field of 1,000 oersteds or so. Then, the card 5 is transported in the direction indicated by an arrow mark in Fig. 7(A) to detect the magnet ink patterns thereon. In this instance, in order to prevent deterioration of the output level, the card 5 is set such that the scanning direction of the gap of the magnetic head 6 and the opposite end edges of the patterns 2a and 2b may extend substantially perpendicularly to each other. Meanwhile, the transporting speed of the card 5 is set to about 45 cm/sec.

As the card 5 is transported and the magnetic head 6 passes over a magnetic ink pattern, the magnetic head 6 is magnetically coupled to the magnetic ink pattern so that it is changed in magnetic flux and thus produces output voltages of the opposite polarities at a beginning end and a last end of the magnetic ink pattern as seen in Fig. 7(B).

Here, the output voltage is significantly high at a magnetic pattern 2b which has a smaller width than 1 mm comparing with the output voltage at a magnetic pattern 2a which has a greater width than 1 mm. Making use of the phenomenon, binary information of a low level and a high level can be reproduced from the magnetic patterns 2a and 2b, respectively, as hereinafter described.

In the following, the phenomenon that the output voltage varies depending upon a width of a magnetic pattern will be proved using the samples A, B and C described hereinabove. The sample A has magnetic patterns of a thickness of 9 microns printed with the original solution of the magnetic ink; the sample B has magnetic patterns of a thickness of about 7.5 microns printed with the magnetic ink diluted at a ratio of 10:1; and the sample C has magnetic patterns of a thickness of about 5.5 microns printed with the magnetic ink diluted at a ratio of 10:2.

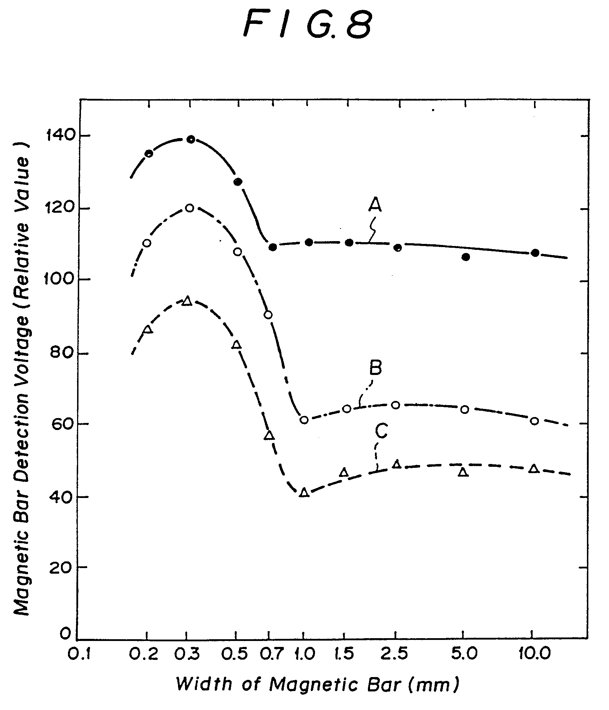

Fig. 8 is a graph illustrating relationships between widths of magnetic bars and detection voltages. It is to be noted that the axis of ordinate indicates maximum values of output voltages of the magnetic head at the individual magnetic patterns which are represented as relative values. Meanwhile, the conditions including the magnetic head and the transporting speed of the card 5 are identical to those described above.

As seen in the graph, the output voltage of the magnetic head presents little variation at any of the samples A, B and C where the width of a magnetic pattern is within a range from 10.0 mm to 1.0 mm, but where the width is smaller than 1 mm, the variation in output voltage is very great, and the output voltage presents its maximum value at or near the width of 0.3 mm. Comparison of such maximum values with average output voltages where the width is within the range of 10.0 mm to 1.0 mm reveals that the maximum value presents an increase of about 30 percent with the sample A; about 85 percent with the sample B; and about 110 percent with the sample C.

It is to be noted that while the outputs decrease at the width of 0.2 mm, it may be considered that this is a phenomenon arising from an influence of the fact that the width of 0.2 mm is close to a minimum limit width is silk screen printing. Accordingly, it cannot be said that it has been made apparent that the output voltage presents its maximum value at or near the width of a magnetic pattern of 0.3 mm.

However, it has been confirmed that the output voltage is raised as the width of a magnetic pattern is reduced. Besides, it has been proved definitely that an output voltage increased by at least 110 percent is obtained with the sample C.

Further, also where magnetic ink patterns are utilized as a code for security, the magnetic record medium of the present invention is advantageous as described in the following.

Where a magnetic pattern is detected by such a magnetic head 6 as shown in Fig. 7(A), remnant magnetization will be produced in a magnetic ink pattern which has a coercive force of 30 oersteds. Accordingly, the magnetic ink pattern can be visually observed readily by means of a magnetic viewer or the like which is put on the market. In order to prevent this, conventionally it is necessary to effect demagnetization each time the magnetic pattern is detected, which leads to complication of the system.

However, since the carbonyl iron powder which is used in the magnetic record medium of the present embodiment has a coercive force of about 10 oersteds so that no remnant magnetization is produced, visual observation by means of the magnetic viewer or the like is very difficult with the magnetic record medium. This is important for security.

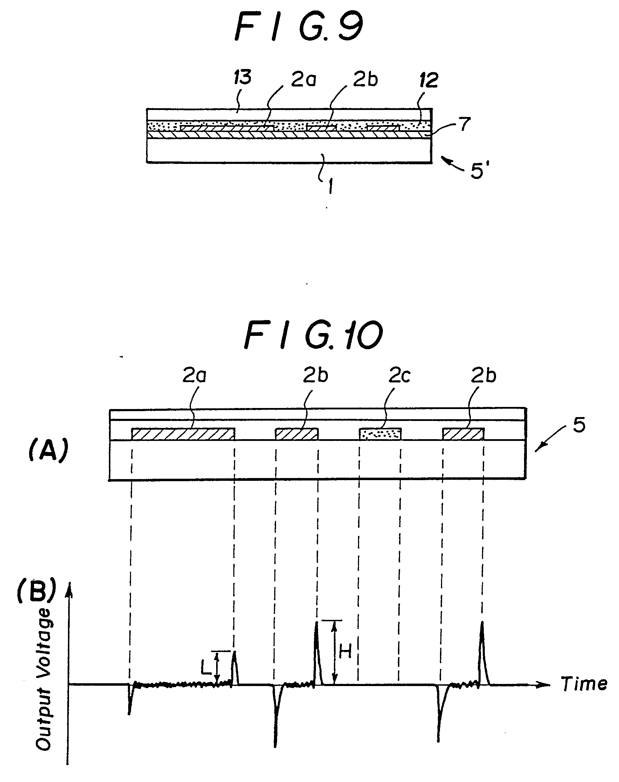

Fig. 9 is a schematic sectional view of a magnetic record medium showing a fourth preferred embodiment of the present invention. The magnetic record medium shown includes magnetic ink of a coercive force of 300 to 3,000 oersteds coated as a magnetic record layer 7 on a polyethylene terephthalate film having a thickness of 188 microns or 250 microns. Magnetic ink patterns 2a and 2b are formed on the magnetic record layer 7. After formation of the magnetic ink patterns 2a and 2b, a magnetic card 5′ is prepared by the same producing process with the card 5 shown in Figs. 6(B) to 6(D). Also with the magnetic card 5′, the magnetic patterns 2a and 2b can be detected by the method illustrated in Figs. 7-(A) to 7(C).

Accordingly, if the dc bias current to the magnetic head 6 is suitably adjusted when a magnetic ink pattern 2a or 2b is to be detected by the magnetic head 6, then occurrence of a demagnetization pattern which conventionally occurs in a magnetic record layer can be prevented.

Here, the demagnetization pattern is a magnetization pattern in the form of a line which is produced in a magnetic record medium by a magnetic field component other than in a magnetic recording direction which appears at an end portion of the magnetic head 6, and because magnetization occurs in a direction other then the orientation of the magnetic record layer, it can be visually observed by means of a magnetic viewer of the like. Accordingly, if a magnetic bar code for security is scanned by the magnetic head 6, a demagnetization pattern is produced in the magnetic record layer 7, and it becomes possible to visually observe the magnetic bar code as a break of the pattern.

To the contrary, with the magnetic record medium of the present embodiment, a high output can be obtained. Accordingly, it is possible to reduce a dc bias current to the magnetic head 6 to such a degree as to cause no demagnetization pattern, which is very advantageous for security.

It is to be noted that the present invention is not limited to the specific embodiments desribed above and can be applied to general magnetic record media having a magnetic pattern thereon. For example, the present invention can be applied not only to magnetic record media having a magnetic bar code for security thereon but also to information record media having binary information applied thereto making use of the fact that an output voltage varies significantly depending upon a width of a magnetic pattern.

In particular, such variations of an output as shown in Figs. 7(A) to 7(C) and 8 can be made correspond to "0" and "1" of binary information. For example, with the sample B, since the relative output level is 120 in the case of a width of 0.3 mm but is 61 in the case of another width of 1.0 mm, if magnetic patterns having a width of 0.3 mm and magnetic patterns having a width of 1.0 mm are arranged in accordance with binary information, then permanent magnetic recording of the binary information can be attained.

Further, it is possible, making use of the fact that an output voltage presents little variation in the range of a width from 1.0 mm to 10.0 mm, to put information on the width itself and also on an output voltage originating from the width and form them by a single printing step.

For example, in the case of the widths of 1 mm and 2 mm, while there is a difference in width equal to the smaller width of 1 mm, output voltages originating from them are substantially equal to each other. Accordingly, information can be put on the width itself. On the contrary, in the case of the widths of 0.5 mm and 1 mm, while similarly there is a difference in width equal to the smaller width of 0.5 mm, the output is significantly higher at the width of 0.5 mm than at the width of 1 mm. Accordingly, information can be put on the magnitude of an output voltage.

Figs. 10(A) and 10(B) are diagrammatic representations illustrating construction of magnetic patterns of a magnetic record medium showing a fourth embodiment of the present invention. Referring to Figs. 10(A) and 10(B), the magnetic record medium shown includes magnetic patterns 2a having a width greater than 1 mm, magnetic patterns 2b having a width smaller than 1 mm, and dummy patterns 2c made of a non-magnetic material.

At a dummy pattern 2c, the magnetic flux of a magnetic head 6 is not changed, and therefore, no output voltage is produced from the magnetic head 6. Accordingly, magnetic record information cannot be visually observed from the apparent patterns, which improves the security of the magnetic record medium.

As for security, the magnetic record medium of the present embodiment is advantageous as described in the following.

Where a magnetic pattern is to be detected by such a magnetic head 6 as shown in Fig. 7(A), remnant magnetization would be produced in a magnetic ink pattern which has a coercive force of 30 oersteds. Therefore, the magnetic ink patterns of the magnetic record medium would be visually observed readily by means of a magnetic viewer or the like which is put on the market. If it is intended to prevent this, conventionally it is necessary to effect demagnetization each time the magnetic record medium is detected, which leads to complication of the system.

However, with the magnetic record medium of the present embodiment, since the carbonyl iron powder used has a coercive force of about 10 oersteds and accordingly no remnant magnetization is produced, it is difficult to visually observe the magnetic ink patterns by means of a magnetic view or the like. This is important for security.

It is to be noted that the present invention is not limited to the specific embodiments described hereinabove and can be applied to general magnetic record media having a magnetic pattern thereon.

As described in detail so far, a magnetic record medium according to the present invention includes magnetic printed patterns of a magnetic material having a particle size of smaller than 10 microns and a coercive force of less than 30 oersteds. Accordingly, the magnetic material is suitable to make ink for magnetic printing, and even if the magnetic record patterns are exposed to an external magnetic field, the magnetic record medium has such small remnant magnetization that the magnetic record patterns thereon cannot be visually observed by means of a magnetic viewer or the like. Accordingly, even if special processing of demagnetization is not applied to the magnetic record medium, the security of the magnetic record medium can be improved with a very simple construction.

Further, with the magnetic record medium of the present invention, if a magnetic pattern having a width smaller than 1 mm is detected by a magnetic head, then the detection output presents a considerably higher value comparing with a magnetic pattern having a width greater than 1 mm, and a signal having a high S/N ratio can be obtained.

Also as for security, the magnetic record medium is advantageous because the width of magnetic ink patterns are so small that the magnetic ink patterns cannot be visually observed readily. Further, even with a magnetic pattern having a small thickness as in the case of the sample C, a sufficiently high output voltage can be obtained, and accordingly the thickness of magnetic patterns can be reduced without deteriorating the S/N ratio of a detecting device side. Accordingly, even if the card is touched at a surface thereof by a hand, the magnetic patterns cannot be sensed readily.

Besides, with the magnetic record medium according to the present invention, information can be recorded only by changing the width of a magnetic pattern, and accordingly it can be produced readily. Further, since the thickness is uniform, the security is improved.

## Claims

1. A magnetic record medium, characterized in that it has at least, a magnetic printed pattern of a magnetic material which has a particle size smaller than 10 microns and a coercive force less than 30 oersteds.

2. A magnetic record medium according to claim 1, characterized in that particles of said magnetic material have either a spherical or a scale-like profile.

3. A magnetic record medium according to claim 1, characterized in that it has a magnetic pattern having a width smaller than 1 mm.

4. A magnetic record medium according to claim 1, characterized in that it has a first magnetic pattern having a width smaller than 1 mm and a second magnetic pattern having a width equal to or greater than 1 mm.

5. A magnetic record medium according to claim 4, characterized in that binary information is recorded thereon by the first and second magnetic patterns.

6. A magnetic record medium according to claim 4 or 5, characterized in that a dummy pattern or patterns of a non-magnetic material are mixed in the first and second magnetic patterns thereon.

EP 0 313 063 A2

# F I G. 1

(A)

6
61    62
DC Bias    Output
102a    102b    102a
Transporting Direction    101

(B)

Detection Voltage
L
H
Time

# F I G. 2

1
A
3    2    3    2

# F I G. 3

Time Corresponding to Width of Card

*Magnetic Head Detection Voltage*

0

Time

# F I G. 4

(A)

(B)

(C)

(D)

# F I G. 5

# F I G. 6

(A)

(B)

(C)

(D)

# F I G. 7

(A)

DC Bias    Output

5 or 5'

Card Transporting Direction

(B)

Output Voltage

Time

(C)

5 or 5'

2b

2a    2b

# F I G. 8

## F I G. 9

## F I G. 10